# EUROPEAN PATENT SPECIFICATION

(11) **EP 1 216 431 B1**
(45) Date of publication and mention of the grant of the patent: **05.10.2005**
(21) Application number: 00923493.1
(22) Date of filing: 18.04.2000
(51) Int. Cl.: G02B 21/26, G02B 23/00, G02B 21/36

(54) **MICROSCOPE CAMERA ADAPTER WITH CONTROL MOTORS**
MIKROSKOPKAMERA-ADAPTER MIT KONTROLLMOTOREN
ADAPTATEUR POUR LA CAMERA D'UN MICROSCOPE EQUIPE DE MOTEURS DE COMMANDE

(43) Date of publication of application: 26.06.2002
(73) Proprietor: GRINBLAT, Avi, New York, NY 10023 (US)
(72) Inventor: GRINBLAT, Avi, New York, NY 10023 (US)
(74) Representative: Preuss, Udo
(86) International application number: PCT/US2000/010447
(87) International publication number: WO 2001/079910

(56) References cited:
- US-A- 4 721 274
- US-A- 5 052 789
- US-A- 5 353 167
- US-A- 5 652 676
- US-A- 5 835 266

## Description

### BACKGROUND OF THE INVENTION

### Field of the Invention

The present invention relates to adapters to connect a video camera to a microscope and more particularly to such an adapter for connecting a surgical or diagnostic microscope to a camera.

### Related Art

At the present time a number of adapters are commercially available to connect a "video" camera to a microscope. Video cameras includes video analog, digital video and digital still cameras, including single and multiple CCD (Charge Coupled Devices). Generally the video camera is small and uses a solid-state electronic imaging device, such as a CCD (Charge Coupled Device). The microscope may be a stereo bright field microscope. Such adapters are available from leading scientific and surgical/diagnostic microscope manufacturers including Nikon, Leica-Wild and Zeiss.

When surgical stereomicroscopes are used for certain types of surgery or diagnoses, such as surgery on the ear, nose, throat, brain, spinal cord and eye (especially retina surgery) and other types of microsurgery or diagnoses, it is important that the exact location of interest be centered in the field of view of the image plane of the video camera and that the image be in focus. The image is displayed on a monitor and may be viewed by the operating surgeon, other members of the surgical team and students. The image may be broadcast, for example, a real-time image may be broadcast on the Internet.

In eye surgery, although the patient is fully anesthetized, the eyeball is dynamic and may move. When it does, its image on the monitor also moves so that the operative site may not be centered, and may not even be on the monitor's screen. In brain surgery often the site of the operation is at the edge of the opening, so that it may become outside of the field of view of the camera. In ear surgery the microscope is often tilted at different angles during the operation, which may cause the operative field to be out of the center or field of view of the camera.

In some industrial applications, such as the microscope inspection of circuit boards and integrated circuits, the device being inspected may move slightly during the inspection. It would be useful to move the image, without moving the microscope, the device being inspected or the camera.

If the point of surgical interest is a portion of a patient's retina and it is off-center or out of focus, or even so far off-center to be off the monitor's screen, the displayed image may be confusing or misleading. In many critical surgical operations it is important that the image on the monitor screen is on-center and in-focus. It would be desirable if the image could be moved by an operator, independently from the movement of the microscope and without interfering with the surgeon's delicate work.

Generally the surgeon is fully occupied by the operation and would not move the microscope or the camera to center the image. Also generally the surgeon would not want the microscope touched in order to center the image, as it might disturb his view through the microscope.

U.S. Patent 5,052,789 shows a television camera connected to a stereoscopic microscope. The optical path to the camera includes a pair of prisms and focusing lenses. However, there is no disclosure of a centering mechanism or how the focusing lenses are controlled. U.S. Patent 5,497,267 is entitled "Video Microscope" and was cited in the parent U.S. Patent 5,652,676.

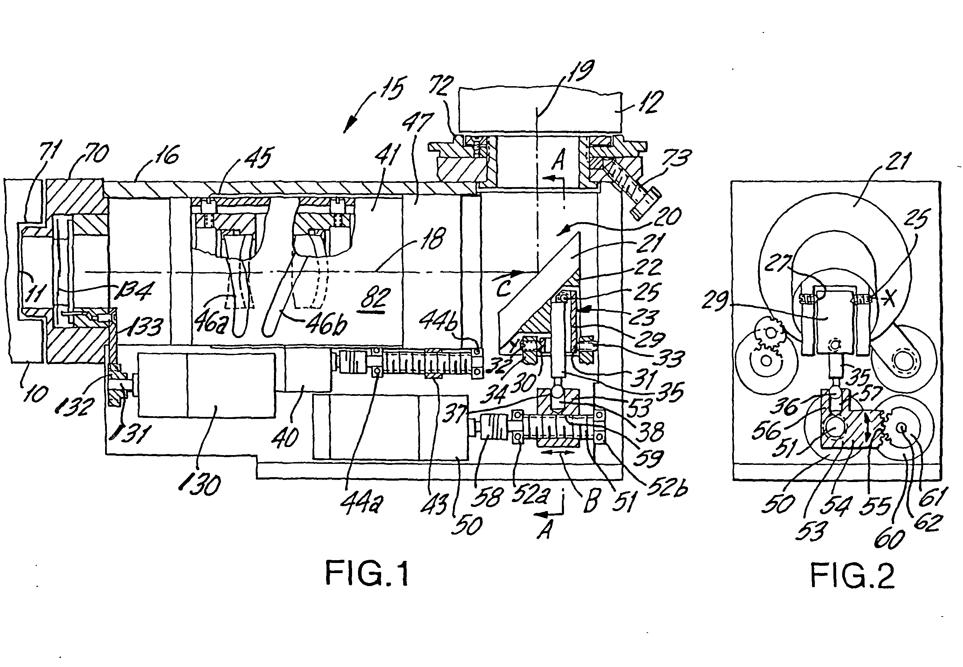

U.S. Patent 5,002,376 at Figure 2 shows a surgical stereomicroscope having a zoom tube for a camera. U.S. Patent 4,277,130 discloses a zoom lens system for a camera in a stereomicroscope.

US 5,652,676 discloses an adapter connecting a small solid-state television camera to a viewing port of a microscope. The adapter has a lens to focus the image from the microscope, the lens being mounted in a slidable lens holder. The lens holder is slid by rotation of a manual control knob which is connected to a pinion gear in mesh with a gear rack on the lens holder. A mirror within the housing of the adapter, in its normal position, reflects the image 45 degrees and is a flat disk-shaped mirror mounted for universal movement about its center. The angle of the mirror is controlled by a finger-operated control rod which is connected to the mirror by a linkage system having a larger ball, a smaller ball mounted in a bore of the larger ball, and two pinion pairs or rotatable mounts. The adapter may be operated from a remote controller by a suitable motor system connected to the control rod and the motor system controlled from a remote controller, such as a joy stick.

### SUMMARY OF THE INVENTION

In accordance with the present invention there is provided an adapter as specified in claim 1 for a microscope, especially a surgical or industrial stereomicroscope, which connects a video camera to the microscope. The adapter permits an operator, for example, a nurse or technician, to control the image seen by the video camera. That control over the image may be a remote control, from any place in the operating room or from a remote location, for example, by communication over the Internet. This permits an accurate image of live surgery to be broadcast without disturbing the surgeon and without touching the microscope. The adapter is controlled by a conventional PC (Personal Computer) using a PC motor controller board, or may be controlled through a dedicated joy stick computer control system. The PC is preferably able to show individual frames ("frame grabber") or a sequence. The adapter is a communication tool to keep an operative field of microsurgery in view on a monitor during an operation without touching the microscope or the camera.

The controls of the adapter are independent from the microscope, so that the image may be moved in x-y position, changed in focus, changed in exposure and changed in magnification, without touching the microscope. For example, an exact degree of magnification may be provided by remote operation of the zoom lens system, when change in magnification is difficult or not possible by operation of the microscope. The adapter has (i) an independent motor, controlled by the user, to focus the image on the camera's imaging device; (ii) two independent motors, each controlled by the user, which provide multidirectional (x and y axii) orientation of the image by moving a mirror or prism; (iii) an automatic motor control program (default position) to control the directional motors so that they return the mirror to its center preset position when it is released; and (iv) an independent motor, controlled by the user, to adjust the aperture for brightness (exposure) control; and (v) an independent motor, controlled by the user, to adjust the magnification of the image by operation of a zoom lens system.

The adapter has a first motor control system which will adjust the focus of the camera by axial movement of the barrel of a zoom lens system. The adapter has second and third motor control systems which move a mirror and thereby permit the image from the microscope to be oriented about the x and y axii (or any combination) relative to the image plane (imaging device) of the camera, so that the point of interest in the viewed object may be centered on the camera image plane.

The first motor control system, for focusing, preferably consists of a precision pulse motor which has a digital encoder and an output shaft having an elongated worm gear fixed thereon. The worm gear meshes with a nut gear fixed to the zoom lens system barrel. Rotation of the worm gear brings the zoom lens system barrel closer, or further away, relative to the microscope viewing port to focus the image.

A flat disk-like mirror is mounted, in its normal position, to reflect the image at 45 degrees from the focusing lens system (zoom lens system) to the television camera image plane. An alternative reflector is a prism. A control rod (elongated arm), which is turnable in all directions, is fixed to a bracket on the rear face of the mirror. The control rod, at its opposite end, is fixed to a ball. The ball is held within a ball cage and the ball cage is part of a geared bracket. The bracket has a bore with internal spiral gear teeth which are in mesh with a worm gear fixed to an output shaft of an x direction precision pulse motor. The bracket member is elongated and has an arm with gear teeth in mesh with gear teeth of a gear fixed to a shaft of a y direction precision pulse motor.

The mirror may be turned about its center point at any angle through its center point, by manipulation of the control rod. That control rod is moved by the x and/or y pulse motors. Such manipulation of the mirror changes the center of the received image relative to the image plane of the television camera, permitting the point of interest on the viewed object to be centered at the vertical and horizontal center of the image plane and consequently its image to be centered at the vertical and horizontal center of the monitor's screen.

### BRIEF DESCRIPTION OF THE DRAWINGS

In the drawings:
Figures 1 is a side cross-sectional view of the adapter of the present invention;
Figure 2 is a front cross-sectional view taken along line A-A of Figure 1;

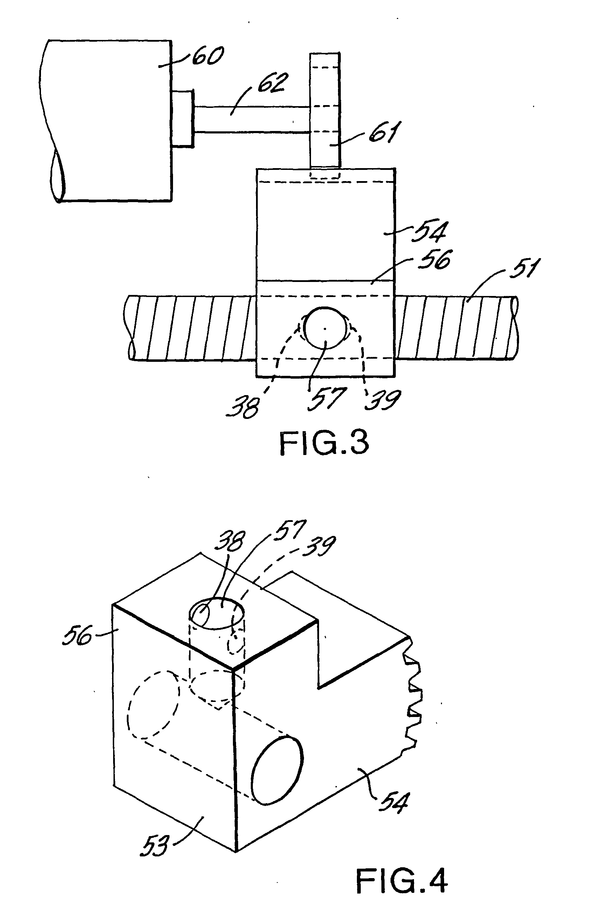

Figure 3 is a perspective view of the gear bracket;
Figure 4 is a top view of the gear bracket;
Figure 5 is a side cross-sectional view of the zoom lens system;
Figure 6 is a side view of the zoom lens barrel showing the zoom control motor;
Figure 7 is a top view of alternative x-y motors;
Figure 8 is a side cross-sectional view of a portion of an alternative adapter; and
Figure 9 is a front cross-sectional view showing the motors of Figure 7 and the portion of Figure 8.

### DETAILED DESCRIPTION OF THE INVENTION

As shown in Figure 1 a stereomicroscope 10 has a viewing port (orifice) 11 with suitable optics to permit the image of the object being viewed to be imaged by a television camera 12. For example, the leading microscope manufacturers, such as Nikon, Canon, Zeiss and Leica-Wild sell microscopes with such a viewing port. A suitable video camera 12 is preferably a lightweight solid-state camera using a CCD (Charge Coupled Device) pick-up imaging device at its image plane. Suitable cameras include the SONY (TM) Model Nos. DXC 003, DXC 999, DXC 760, DXC 960, DXC 107, DXC 101 and cameras from JVC, Panasonic, Toshiba and Ikegami. The camera includes bayonet or standard "C" mounts. The adapter is suitable for most types of cameras used in medical and industrial applications.

The adapter 15 of the present invention fits between the microscope 10 and the camera 12. The adapter 15 has a housing 16, preferably of machined metal and is tubular (ring-like in cross-section). The housing 17 has imaginary central axii 18,19 and the axis 18 is 90° relative to axis 19 in the same imaginary plane.

A centering system 20 is positioned within housing 16 and includes a glass mirror 21. The mirror 21 is flat with an F.5 focal distance and is disk-like (rounded), i.e., shaped like a flat coin. The mirror 21 has a highly reflective front surface. The mirror is "superflat", i.e.., flat to one-quarter fringe. Alternatively, a prism may be used in place of the mirror. The mirror 21 is mounted on bracket 22 which is mounted on a gimbal-like arrangement 23 which permits the mirror 21 to be turned in all directions about its center, i.e., turned about two axii which are perpendicular to each other (imaginary x and y axii). The x axis is into the paper in Figure 1 and is through the pins 25 in Figure 2. The y axis is into the paper in Figure 2 and through the pins 32,33 in Figure 1.

The bracket 22 is rotatably mounted by its two opposite extending shaft-like pins 25 which are rotatably mounted in round indentations 27 of the gimbal member 29.

The bracket 22 may be turned clockwise or counterclockwise about the center of arms 25 (Figure 1). The gimbal member 29 has two opposite indentations 30,31 which enclose the ends of pins 32,33 respectively. The pins 32,33 are fixed in tubular mounting member 34 which is held in the housing 16. The gimbal member 29 is rotatable about the pins 32,33.

An extension arm 35 (control rod) has its inner end (proximal end) fixed to the bracket 22. A small ball 36 is fixed at the outer end (distal end) of the extension arm 35 (control rod) and fits within a ball cage 37 (partial spherical seat) formed on the inner walls of the bore 38 of a gear bracket 54.

As shown in Figures 1 and 2 the adapter 15 includes four digital pulse motors. These motors, and the zoom control motor 80, are precision direct current digital pulse motors each of which has an internal encoder to relay back its shaft position, and an externally extending output shaft. They operate from digital commands generated by the controller CPU which may be a PC (Personal Computer). The motors are available from Maxim, Switzerland, and are precision DC servo motors.

The first motor 130 controls the iris (iris diaphragm). Its output shaft 131 has a gear 132 fixed thereon which meshes with gear teeth on the end of a control lever 133. The lever 133 controls the opening and closing of leaf iris 134 (adjusts the aperture) which is of conventional construction, using overlapping leaves. For example, a precision iris diaphragm with a 1-30 mm (min. 1mm - max 30 mm) lever adjust aperture is available from Edmund Scientific, Barrington, New Jersey.

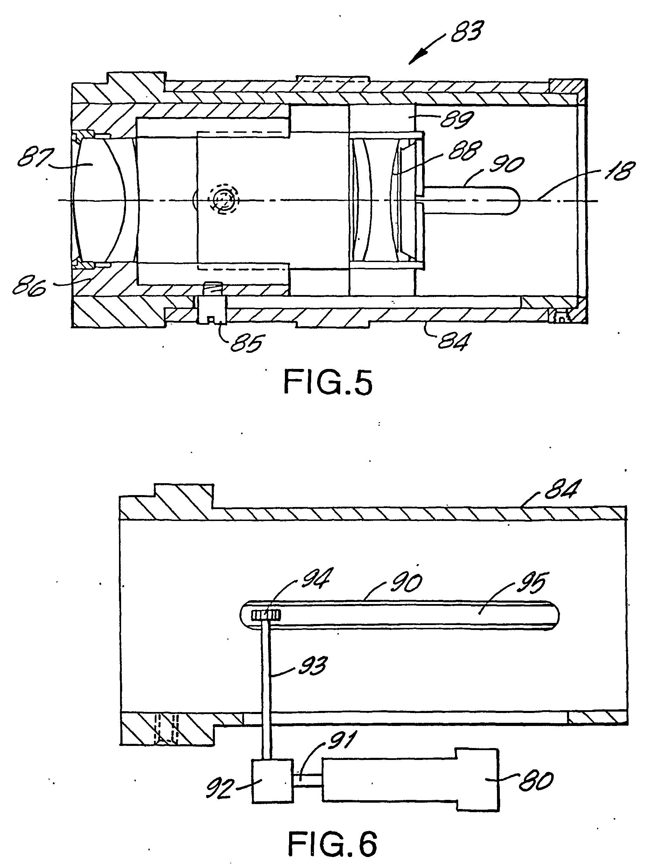

The second motor 40 controls the focus by moving the zoom lens system barrel 41 of zoom lens system 82 within its tracks. The motor 40 has an output shaft which has spiral worm gear 42 fixed thereto. The worm gear 42 rotates in bearings 44a,44b. In Figure 1 the barrel 41 has two external handles 46a, 46b which are used to manually operate cams internal to the barrel and thereby adjust the magnification (zoom). Preferably the magnification (zoom) is adjusted by a motor controlled by the computer, as shown in Figure 6.

The zoom systems 82 and 83 are video lenses having manual or preferably motor adjustment of zoom and motor adjustment of focus. They preferably zoom in the range from a focal length (mm) of 60 mm to 120 mm. The range of focal lengths selected for the zoom lens system depends upon the use of the microscope and the type of camera and the desired magnification and, preferably, is a zoom range of 60 mm and includes 100 mm for eye surgery, 100 mm for nose and throat surgery and 140 mm for neurosurgery.

As shown in Figure 5, the preferred zoom lens system 83 has a cylindrical barrel 84. That barrel 84 is moved (the lens system 83 is moved), for control of focus, by motor 40 as in Figure 1. The barrel 84 is connected through screws 85 to inner ring 86. A compound lens 87 is mounted in ring 86.

A compound lens 88 is mounted in an inner ring 89 which is moved, for adjustment of magnification, along the optical axis 18. For zooming, the lens 88 is moved and lens 87 remains in place. The ring 89 is mounted on a threaded rack 95 which is exposed through the slot 90 in the barrel 84.

As shown in Figure 6 a pulse motor 80 has an encoder and is controlled by the controller CPU, like the other motors. Its output shaft 91 is connected to a right angle transmission 92 whose output shaft 93 has a pinion gear 94 at its end. That pinion gear 94 is in mesh with the gear teeth on the rack 95. The rack 95 is fixed to the inner ring 89. To obtain a zoom adjustment the motor 80 is operated causing the pinion gear 94 to rotate. Such rotation of gear 94 moves rack 95, thereby moving the ring 89 and its lens 88 to adjust the magnification.

A third motor 50 and fourth motor 60 control the movement of the mirror 21 about the x and y axii, respectively. The motor 50 has an output shaft 58 which is fixed to worm gear 51, the worm gear 51 being rotatably supported by bearings 52a, 52b. A gear bracket 53 has a bore 59 with internal gear teeth which meshes with the worm gear 51. When the worm gear rotates it moves the bracket 53 in the back and forth directions of arrows B. The bracket 53 is elongated so that its elongated teeth 55 stay in mesh with the narrow teeth 61 when the fixture is translated in the B directions. The bracket 53 is generally L-shaped and has an arm 54 with gear teeth 55 at its free end (Figure 2). The gear teeth 55 mesh with the gear teeth of gear 61. The bracket 53 has an upstanding arm 56 having a bore 57 therein. The bore has two opposite spherical shaped indentations 38,39 near its top which capture the ball 36 and form a ball cage.

In operation, the user will generate a control signal to move the mirror in any direction (about x and y axii) by operation of a computer keyboard, joy stick, mouse or other control device. The control signal will be converted to the corresponding number of pulses by a computer CPU circuit board (not shown). The motor 50 is activated and turns the worm gear 51, for example, 3 degrees clockwise (as shown in Figure 2). This causes bracket 53 to move to the right and pulls the ball 37 to the right (Figure 1). The ball 36 is mounted on the arm 35 and the gimbal 29 is pivoted on pins 25 so that the mirror moves in the opposite direction (the direction opposite arrow A and counterclockwise about pins 25 - the x axis).

To move the mirror 21 about the y axis the user generates a y axis control signal. The motor 60 is activated and its shaft 62, for example, turns clockwise 3 degrees (Figure 2). The gear 61 will rotate clockwise 3 degrees, causing the bracket arm 54 to turn counterclockwise 3 degrees (Figure 2). When arm 56 turns counterclockwise 3 degrees it moves the ball 36 to the left (Figure 2). The top of the arm 35, and the mirror, are turned clockwise 3 degrees (about y axis). The image on the mirror, which is the image of the object being viewed by the microscope, may be turned in any direction, so that any portion of that image may be directed to any portion of the image plane of the camera.

The microscope mount includes a ring 70 having a tubular nose portion 71 which is attached to housing 16. The nose portion 71 fits within a viewing port of the microscope. An attachment ring 72 having a fixing screw 73 is connected to housing 16 and is used to mount the television camera. The ring 72 accepts conventional camera mount systems including "C" and bayonet types.

It is an important feature of the present invention that the mirror be automatically returned to its center (normal position) on a user generated command or/and as a default option. The computer or CPU board has that center position in its memory. It also has in its memory the present position of the mirror derived from the encoders of the x and y motors. When the user commands the central position, the computer subtracts (or adds) the present position from the central position and issues the digital pulse signals to energize the x and/or y motors to move the mirror to its central position.

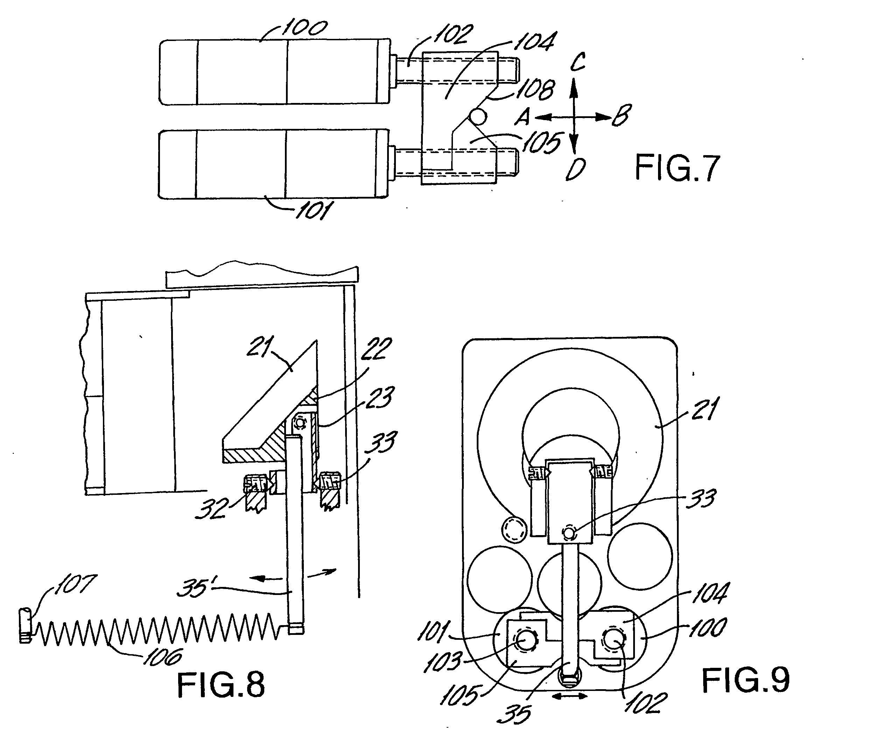

Figures 7-9 show an alternative motor system to control the movement of the mirror 21 about the x and y axii. This motor system uses a third motor 100 and a fourth motor 101, in place of the motors 50 and 60. The motors 100,101 are also DC servo pulse motors with digital encoders and are controlled by the controller CPU. The output shaft 102 of motor 100 and the output shaft 103 of motor 101 are screw-threaded shafts. The shaft 102 is threaded into triangular plate (slider) 104 and the shaft 103 is threaded into triangular plate (slider) 105.

As shown in Figure 7, the plate 104 is moved in the B (forward) and A (backward) direction by clockwise and counter-clockwise rotation, respectively, of shaft 102. Similarly, the plate 105 is moved in the B and A directions by clockwise and counter-clockwise rotations of shaft 103.

As shown in Figure 8, the arm 35' (which has the same function as arm 35") is attached, it its free bottom end, to spring 106, whose other end is attached to fixed post 107.

As shown in Figure 9, the triangular plates (sliders) 104,10 overlap and are in contact with extension arm (control rod) 35'. When plate 104 advances (B direction of Figure 7) it pushes the arm 35' in the B direction and also in the C direction, because arm 35' slides on the forward face 108 of plate 104. The controller's control of the motors 100,101 permits movement of the arm (control rod) 35' in the A-B, C-D directions. For example, for movement only in the A direction, both shafts 102,103 are rotated simultaneously and in the same direction and same degree of rotation.

The plates 104,105 are freely slidable on each other and are overlapped so that they do not rotate. They may be slidable in frame members (not shown).

## Claims

1. An adapter (15) adapted to be positioned between a television camera (12) having an image plane with a center, and a microscope (10) producing an image, the adapter (15) transmitting an image of an object being viewed by the microscope (10) to the television camera (12), the adapter (15) comprising:
(a) a housing (16);
(b) focus means (82, 83) within the housing (16) to focus the image;
(c) a reflector (21) mounted within the housing (16), reflector mounting means (22, 23) to mount the reflector for swinging motion about two imaginary axii (x, y);
(c1) a control rod (35) extending within the housing and acting on the reflector mounting means;
(d) a first motor means (50) connected to the control rod (35) to move the reflector (21) about one axis (x); and
(e) a second motor means (60) connected to the control rod (35) to move the reflector about the other axis (y), whereby the first and second motor means (50, 60) move the reflector (21) to reflect a selected portion of the image on the center of the camera's image plane;
(f) wherein the first and second motor means are arranged within the housing (16).

2. The adapter of claim 1, wherein the focus means further comprises:
a lens holder (41, 84) movable within the housing (16), a lens system (82, 83) mounted within the lens holder (41, 84), a linkage means (460, 466, 84, 95) to move the lens holder (41, 84) and thereby focus the image;

3. The adapter (15) as in claim 2 wherein the focus means includes a zoom lens system (82, 83) mounted in a barrel and a pulse motor (40) to move the linkage means (84).

4. The adapter (15) as in claim 3 wherein the focus means includes a pulse motor (40) and the linkage means (84) includes a worm gear (42) rotatably mounted within the housing (16) and a gear in mesh with the worm gear (42) and fixed to the barrel and wherein the worm gear is driven by the pulse motor (40) to thereby move the barrel.

5. The adapter (15) as in claim 1 wherein the reflector (21) is a flat disk-like mirror having a center.

6. The adapter (15) as in claim 1 wherein the reflector, in its normal centered position, reflects the image at a 45 degree angle.

7. The adapter (15) as in claim 1 wherein the reflector mounting means (22) includes a reflector bracket (22) fixed to the reflector, first gimbal (23, 29) means to freely rotatably mount the reflector (21) about the one axis, and second gimbal means (23, 29) to freely rotatably mount the first means about the other axis.

8. The adapter (15) as in claim 1 and including a gear bracket (54) and a control rod (35) extending within the housing (16) and connected between the gear bracket (54) and the reflector bracket (22).

9. The adapter (15) as in claim 8 wherein the gear bracket (54) has a ball cage (37) and a ball is fixed to the control rod (35) and is movable within the ball cage (37).

10. The adapter (15) in accordance with claim 1, further comprising:
a control rod means (35);
wherein the control rod means is adapted such that the first motor means (50) moves the control rod means (35) in response to computer generated signals in order to move the reflector about one axis (x) and the second motor means (60) moves the control rod means (35) in response to computer generated signals in order to move the reflector about an other axis (y); and
wherein the focus means include a movable lens barrel (84), a lens (87, 88) mounted within the lens barrel (84), means to move the lens barrel (84, 95)and thereby focus the image.

11. The adapter (15) as in claim 10 wherein the lens is a zoom lens system (82, 83).

12. The adapter (15) as in claim 10 wherein the first and second motor means (60, 50) include two pulse motors each having an output shaft and an encoder means to derive the position of the output shaft. - -

13. The adapter as in claim 10 wherein the reflector mounting means (22, 23) includes a gimbal (23, 29) which is rotatable about two perpendicular axii.

14. The adapter as in claim 10 wherein the reflector (21) is a mirror which is flat and in the form of a disk.

15. The adapter (15) of claim 1, further comprising:
reflector return means including computer memory to control the first and second motors (60, 50) and to automatically return the reflector (21) to a centered normal position.

16. The adapter (15) as in claim 15 and including a zoom lens system (82, 83) within the housing (16) to focus the image.

17. The adapter (15) as in claim 15 wherein each of the first and second motor means (60, 50) is a pulse motor having an output shaft and an encoder to derive the position of the output shaft.

18. The adapter (15) as in claim 15 wherein the reflector mounting means (22, 23) includes a gimbal (23, 29) which is rotatable about two perpendicular axii (x, y).

19. An adapter (15) as in claim 15 wherein the reflector (21) is a mirror which is flat and in the form of a disk.

## Patentansprüche

1. Ein Adapter (15) angepasst, um zwischen eine Fernsehkamera (12), die eine Bildebene mit einer Mitte aufweist und ein Mikroskop (10), welches ein Bild erzeugt, positioniert zu werden,
wobei der Adapter (15) ein Bild eines Objekts, das von dem Mikroskop (10) gesehen wird, an die Fernsehkamera (12) übermittelt, wobei der Adapter (15) aufweist:
a) ein Gehäuse (16);
b) Fokussierungs-Mittel (82, 83) innerhalb des Gehäuses (16), um das Bild zu fokussieren;
c) einen Reflektor (21) der innerhalb des Gehäuses (16) angebracht ist, Reflektorbefestigungs-Mittel (22, 23), um den Reflektor für eine Schwenkbewegung um zwei imaginäre Achsen (x,y) anzubringen;
c1) einen Steuerstab (35), der sich in dem Gehäuse erstreckt und der auf das Reflektorbefestigungs-Mittel einwirkt;
d) ein erstes Motor-Mittel (50), das mit dem Steuerstab (35) verbunden ist, um den Reflektor (21) um eine Achse (x) zu bewegen; und
e) ein zweites Motor-Mittel (60), das mit dem Steuerstab (35) verbunden ist, um den Reflektor um die andere Achse (y) zu bewegen,
womit das erste und zweite Motor-Mittel (50, 60) den Reflektor (21) bewegen, dass ein ausgewählter Teil des Bildes in der Mitte der Bildebene der Kamera reflektiert wird;
f) wobei das erste und zweite Motor-Mittel innerhalb des Gehäuses (16) angeordnet sind.

2. Der Adapter nach Anspruch 1, wobei das Fokussierungs-Mittel ferner aufweist:
einen Linsenhalter (41, 84), der innerhalb des Gehäuses (16) beweglich ist,
ein Linsensystem (82, 83), das innerhalb des Linsenhalters (41, 84) angebracht ist,
ein Verbindungs-Mittel (460, 466, 84, 95) um den Linsenhalter (41, 84) zu bewegen und dabei das Bild zu fokussieren;

3. Der Adapter (15) nach Anspruch 2,
wobei das Fokussierungs-Mittel ein Zoom-Linsensystem (82, 83), welches in einer Trommel angebracht ist und einen Pulsmotor (40) aufweist um das Verbindungs-Mittel (84) zu bewegen.

4. Der Adapter (15) nach Anspruch 3,
wobei das Fokussierungs-Mittel einen Pulsmotor (40) aufweist und das Verbindungs-Mittel (84) ein Schneckengetriebe (42) aufweist, das drehbar innerhalb des Gehäuses (16) angeordnet ist und ein Getriebe, das mit dem Schneckengetriebe (42) in Eingriff ist und das fest mit der Trommel verbunden ist und
wobei das Schneckengetriebe von dem Pulsmotor (40) angetrieben wird, um dabei die Trommel zu bewegen.

5. Der Adapter (15) nach Anspruch 1,
wobei der Reflektor (21) ein flacher scheibenförmiger Spiegel ist, der eine Mitte aufweist.

6. Der Adapter (15) nach Anspruch 1,
wobei der Reflektor in seiner normalen Mittenposition das Bild in einem 45 Grad-Winkel reflektiert.

7. Der Adapter (15) nach Anspruch 1,
wobei das Reflektorbefestigungs-Mittel (22) einen Reflektorhalter (22) aufweist, der an dem Reflektor befestigt ist, ein erstes Kardan-Mittel (23, 29), um den Reflektor (21) um die eine Achse frei drehbar anzuordnen und ein zweites Kardan-Mittel (23, 29) aufweist um das erste Mittel um die andere Achse frei drehbar anzuordnen.

8. Der Adapter (15) nach Anspruch 1 und einen Getriebebügel (54) und eine Steuerstange (35) aufweisend, die sich innerhalb des Gehäuses (16) erstreckt und die zwischen dem Getriebebügel (54) und dem Reflektorhalter (22) verbunden ist.

9. Der Adapter (15) nach Anspruch 8,
wobei der Getriebebügel (54) ein Kugelkäfig (37) aufweist und ein Ball an dem Steuerstab (35) befestigt ist und innerhalb des Kugelkäfigs (37) bewegbar ist.

10. Der Adapter (15) nach Anspruch 1, ferner aufweisend:
ein Steuerstab-Mittel (35);
wobei das Steuerstab-Mittel derart angepasst ist, dass das erste Motor-Mittel (50) das Steuerstab-Mittel (35) als Antwort auf computer-erzeugte Signale bewegt, um den Reflektor um eine Achse (x) zu bewegen und dass das zweite Motor-Mittel (60) das Steuerstab-Mittel (35) als Antwort auf computer-erzeugte Signale bewegt, um den Reflektor um eine andere Achse (y) zu bewegen; und
wobei das Fokussierungs-Mittel eine bewegliche Linsentrommel (84) aufweist, eine Linse (87, 88), die innerhalb der Linsentrommel (84) angebracht ist, Mittel, um die Linsentrommel (84, 95) zu bewegen und dabei das Bild zu fokussieren.

11. Der Adapter (15) nach Anspruch 10,
wobei die Linse ein Zoomlinsensystem (82, 83) ist.

12. Der Adapter (15) nach Anspruch 10,
wobei das erste und zweite Motor-Mittel (60, 50) zwei Pulsmotoren aufweist, wobei jeder eine Ausgangswelle und ein Encoder-Mittel, um die Position der Ausgangswelle abzuleiten, aufweist.

13. Der Adapter nach Anspruch 10,
wobei die Reflektorbefestigungs-Mittel (22, 23) ein Kardangelenk (23, 29) aufweist, welches um zwei senkrechte Achsen drehbar ist.

14. Der Adapter nach Anspruch 10,
wobei der Reflektor (21) ein Spiegel ist, welcher flach und in der Form einer Scheibe ist.

15. Der Adapter (15) nach Anspruch 1, weiter aufweisend:
Reflektorrückstell-Mittel aufweisend einen Computerspeicher, um den ersten und zweiten Motor (60, 50) zu steuern und um den Reflektor (21) automatisch in eine zentrierte Normalposition zurückzuführen.

16. Der Adapter (15) nach Anspruch 15 und innerhalb des Gehäuses (16) ein Zoom-Linsensystem (82, 83) aufweisend, um das Bild zu fokussieren.

17. Der Adapter (15) nach Anspruch 15,
wobei jedes von dem ersten und zweiten Motor-Mittel (60, 50) ein Pulsmotor ist, welcher eine Ausgangswelle und einen Encoder aufweist, um die Position der Ausgangswelle abzuleiten.

18. Der Adapter (15) nach Anspruch 15,
wobei das Reflektorbefestigungs-Mittel (22, 23) ein Kadarngelenk (23, 29) aufweist, welches um zwei senkrechte Achsen (x, y) drehbar ist.

19. Ein Adapter (15) nach Anspruch 15,
wobei der Reflektor (21) ein Spiegel ist, welcher flach und in der Form einer Scheibe ist.

## Revendications

1. Adaptateur (15) adapté pour être positionné entre une caméra de télévision (12) ayant un plan d'image avec un centre, et un microscope (10) produisant une image, l'adaptateur (15) transmettant l'image d'un objet visualisé par le microscope (10) à la caméra de télévision (12), l'adaptateur (15) comprenant :
(a) un logement (16) ;
(b) un moyen de focalisation (82, 83) dans le logement (16) pour focaliser l'image ;
(c) un réflecteur (21) monté dans le logement (16), des moyens de support de réflecteur (22, 23) pour monter le réflecteur (21) en vue d'un mouvement d'oscillation autour de deux axes imaginaires (x, y) ;
(c1) une tige de commande (25) s'étendant dans le logement et agissant sur les moyens de support de réflecteur (22, 23)
(d) un premier moyen moteur (50) relié à la tige de commande (25) pour déplacer le réflecteur (21) autour d'un axe (x) ; et
(e) un second moyen moteur (60) relié à la tige de commande (25) pour déplacer le réflecteur autour de l'autre axe (y), moyennant quoi les premier et second moyens moteurs (50, 60) déplacent le réflecteur (21) de façon à réfléchir une partie sélectionnée de l'image au centre du plan de l'image de la caméra ;
(f) dans lequel les premier et second moyens moteurs sont agencés à l'intérieur du logement (16).

2. Adaptateur selon la revendication 1, dans lequel les moyens de focalisation comprennent en outre :
un support de lentille (41, 84) mobile à l'intérieur du logement (16), un système de lentilles (82, 83) monté à l'intérieur du support de lentille (41, 84), un moyen de liaison (460, 466, 84, 95) pour déplacer le support de lentilles (41, 84) et focaliser de ce fait l'image ;

3. Adaptateur (15) selon la revendication 2, dans lequel le moyen de focalisation comprend un système à réglage de zoom (82, 83) monté dans un barillet et un moteur à impulsions (40) pour déplacer le moyen de liaison (84).

4. Adaptateur (15) selon la revendication 3, dans lequel le moyen de focalisation comprend un moteur à impulsions (40) et le moyen de liaison (84) comprend un engrenage à vis sans fin (42) monté de manière rotative dans le logement (16) et un engrenage en engrènement avec l'engrenage à vis sans fin (42) et fixé au barillet, dans lequel l'engrenage à vis sans fin est entraîné par le moteur à impulsions (40) pour déplacer de ce fait le barillet.

5. Adaptateur (15) selon la revendication 1, dans lequel le réflecteur (21) est un miroir similaire à un disque plat ayant un centre.

6. Adaptateur (15) selon la revendication 1, dans lequel le réflecteur, dans sa position centrée normale, réfléchit l'image selon un angle de 45 degrés.

7. Adaptateur (15) selon la revendication 1, dans lequel le moyen de support de réflecteur (22) comprend un support de réflecteur (22) fixé au réflecteur, des premiers moyens à cardan (23, 29) pour monter librement de manière rotative le réflecteur (21) autour d'un axe, et des seconds moyens à cardan (23, 29) pour monter librement de manière rotative les premiers moyens autour de l'autre axe.

8. Adaptateur (15) selon la revendication 1 et comprenant un support d'engrenages (54) et une tige de commande (35) s'étendant à l'intérieur du logement (16) et reliée entre le support d'engrenages (54) et le support de réflecteur (22) ;

9. Adaptateur (15) selon la revendication 8, dans lequel le support d'engrenages (54) a une cage à billes (37) et une bille est fixée à la tige de commande (35) et est mobile à l'intérieur de la cage à billes (37).

10. Adaptateur (15) selon la revendication 1, comprenant en outre :
une tige de commande (35) ;
dans lequel la tige de commande est adaptée de sorte que le premier moyen moteur (50) déplace la tige de commande (35) en réponse à des signaux générés par ordinateur afin de déplacer le réflecteur autour d'un axe (x) et que le second moyen moteur (60) déplace la tige de commande (35) en réponse à des signaux générés par ordinateur afin de déplacer le réflecteur autour d'un autre axe (y) ; et
dans lequel les moyens de focalisation comprennent un barillet à lentilles mobile (84), une lentille (87, 88) montée à l'intérieur du barillet à lentilles (84), des moyens pour déplacer le barillet à lentilles (84, 95) et focaliser de se fait l'image.

11. Adaptateur (15) selon la revendication 10, dans lequel la lentille est un système à réglage de zoom (82, 83).

12. Adaptateur (15) selon la revendication 10, dans lequel les premier et second moyens moteurs (50, 60) comprennent deux moteurs à impulsions ayant chacun un arbre de sortie et un moyen d'encodage pour en déduire la position de l'arbre de sortie.

13. Adaptateur selon la revendication 10, dans lequel le moyen de support de réflecteur (22, 23) comprend un cardan (23, 29) qui est mobile en rotation autour de deux axes perpendiculaires.

14. Adaptateur selon la revendication 10, dans lequel le réflecteur (21) est un miroir qui est plat sous la forme d'un disque.

15. Adaptateur (15) selon la revendication 1, comprenant en outre :
des moyens de retour de réflecteur comprenant une mémoire d'ordinateur pour commander les premier et second moyens moteurs (60, 50) et pour retourner automatiquement le réflecteur (21) à une position centrée normale.

16. Adaptateur (15) selon la revendication 15, comprenant un système à réglage de zoom (82, 83) à l'intérieur du logement (16) pour focaliser l'image.

17. Adaptateur (15) selon la revendication 15, dans lequel chacun des premier et second moyens moteurs (60, 50) est un moteur à impulsions ayant un arbre de sortie et un encodeur pour en déduire la position de l'arbre de sortie.

18. Adaptateur (15) selon la revendication 15, dans lequel le moyen de support de réflecteur (22, 23) comprend un cardan (23, 29) qui peut tourner autour de deux axes perpendiculaires (x, y).

19. Adaptateur (15) selon la revendication 15, dans lequel le réflecteur (21) est un miroir qui est plat et sous la forme d'un disque.
